# EUROPÄISCHE PATENTSCHRIFT

(11) **EP 0 612 871 B1**
(45) Veröffentlichungstag und Bekanntmachung des Hinweises auf die Patenterteilung: **29.05.1996**
(21) Anmeldenummer: 93120992.8
(22) Anmeldetag: 28.12.1993
(51) Int. Cl.: D01H 9/18, B65H 67/06, B65G 25/12

(54) **Transportvorrichtung**
Transporting device
Dispositif de transport

(30) Priorität: 26.02.1993 DE 4305916
(43) Veröffentlichungstag der Anmeldung: 31.08.1994
(73) Patentinhaber: Rosink GmbH + Co. KG, D-48529 Nordhorn (DE)
(72) Erfinder: Stentenbach, Udo, D-48531 Nordhorn (DE)
(74) Vertreter: Stenger, Watzke & Ring Patentanwälte

(56) Entgegenhaltungen:
- EP-A- 0 423 519
- DE-A- 3 734 258
- DE-A- 4 031 511
- PATENT ABSTRACTS OF JAPAN vol. 011, no. 266 (M-620)28. August 1987 & JP-A-62 070 108 (HITACHI ELECTRONICS) 31. März 1987

## Beschreibung

Die Erfindung betrifft eine Transportvorrichtung, insbesondere zum Transport von Spinnkannen, mit wenigstens einer Transportbahn, auf der die zu transportierenden Gegenstände in einer Reihe verschiebbar sind und die in Längsrichtung der Transportbahn verlaufende Schubstangen aufweist, die mittels eines Antriebes hin- und herbewegbar sowie in Nuten verdrehbar sind.

In der Textilindustrie werden Faserbänder mittels sogenannter Spinnkannen zu den Flyern oder Spinnmaschinen transportiert. Aus der EP-A 0 423 519 ist eine Transportbahn zum Weiterleiten von Spinnkannen bekannt, bei der die zu transportierenden Spinnkannen mittels an einer Schubstange befestigten Mitnehmern über Gleitschienen gezogen oder geschoben werden. Mittels dieser bekannten Transportbahn ist es zwar möglich, leere und/oder volle Spinnkannen zu transportieren, jedoch benötigt diese Vorrichtung einen hohen Wartungsbedarf, da zum einen die an der Schubstange angeordneten Mitnehmer einer hohen Scherbelastung ausgesetzt sind und somit ihre Lebensdauer begrenzt ist und zum anderen die aus einem Kunststoffmaterial bestehenden Gleitschienen einem hohen Verschleiß unterliegen, wenn die bis zu 80 kg schweren Spinnkannen über diese Gleitschienen geschoben oder gezogen werden. Darüber hinaus stellen die im Arbeitszustand aus dem Boden herausragenden Mitnehmer der Schubstange ein hohes Unfallrisiko dar. Weitere Nachteile dieser bekannten Transportbahn bestehen darin, daß die Spinnkannen nur in festgelegten Abständen, nämlich dem Abstand der einzelnen Mitnehmer zueinander, transportiert werden können und die Transportbahn beim Begehen oder Befahren nur wenig belastbar ist.

Davon ausgehend liegt der Erfindung die **Aufgabe** zugrunde, ein einfach und sicher konstruierte, aus nur wenigen Bauteilen bestehende Transportvorrichtung, insbesondere für Spinnkannen, zu schaffen, auf der die zu transportierenden Gegenstände in einem beliebigen Abstand zueinander angeordnet werden können.

Die **Lösung** dieser Aufgabenstellung durch die Erfindung ist dadurch gekennzeichnet, daß die Transportbahn aus Lagerblöcken mit mindestens zwei darin parallel und mit Abstand zueinander angeordneten, in Längsrichtung der Transportbahn verlaufenden teilkreisförmigen Nuten besteht, und daß in den Nuten zylindrische, auf ganzer Länge mit Abflachungen versehene Schubstangen angeordnet sind.

Eine solcherart ausgestaltete Transportvorrichtung hat den **Vorteil**, daß die gesamte Vorrichtung aus nur wenigen Bauteilen, nämlich einem Lagerblock, zwei Schubstangen und einem Antrieb zum Bewegen der Schubstangen besteht und keine Schmierung erforderlich ist. Der Transport der Gegenstände erfolgt, nachdem durch Verdrehen der Schubstangen die Gegenstände geringfügig von ihrer Unterlage abgehoben worden sind. Während des Transports ruhen die Gegenstände also auf den Schubstangen und unterliegen so keinem Verschleiß, wie es bei einem Verschieben auf einer feststehenden Unterlage der Fall wäre.

Bei einer bevorzugten Ausführungsform besteht die Transportbahn aus zwei Lagerblöcken mit jeweils einer in Längsrichtung verlaufenden teilkreisförmigen Nut und darin angeordneter abgeflachter Schubstange. Die Verwendung von zwei getrennten Lagerböcken ermöglicht es, daß der Abstand der Schubstangen einer Transportbahn zueinander auf die zu transportierenden Gegenstände angepaßt werden kann.

Zum Transportieren der Gegenstände werden die Schubstangen soweit verdreht, bis die Schubstangen mit ihren runden Mantelflächen an dem Boden des Gegenstandes anliegen. Durch das Verdrehen ragen die runden Mantelflächen der Schubstangen nach oben aus den teilkreisförmigen Nuten heraus. Auf den Lagerblöcken aufstehende Gegenstände werden durch diese Drehbewegung der Schubstangen angehoben. Durch das anschließende Vor- oder Zurückschieben der Schubstangen in Längsrichtung der Nuten werden die vollen und/oder leeren Gegenstände transportiert.

Bei einer praktischen Ausführungsform einer erfindungsgemäßen Transportvorrichtung werden die Schubstangen für den Transport der Gegenstände um mindestens 45° verdreht.

Bei einer alternativen Ausführungsform werden die beiden parallelen Schubstangen einer Transportbahn gegensinnig zueinander verdreht.

Gemäß einer weiteren Ausführungsform der Erfindung können die beiden parallelen Schubstangen gleichsinnig um 360° oder ein Vielfaches davon verdreht werden, so daß die zu transportierenden Gegenstände in Querrichtung zu den Schubstangen transportiert werden. Auf diese Weise können die Gegenstände beispielsweise auf eine andere Transportbahn übergeben werden.

Die aus einem oder zwei Lagerblöcken gebildete Transportbahn kann sowohl auf dem Boden angeordnet werden als auch in den Boden eingelassen werden. Bei der Ausführungsform, bei welcher die Lagerblöcke auf dem Boden angeordnet sind, können die Lagerblöcke an der Längsseite Auflaufschrägen aufweisen, damit ein störungs- und unfallfreies Begehen und Befahren des die Transportvorrichtung aufweisenden Bodens erfolgen kann. Die sehr kompakt ausgebildeten Transportbahnen weisen bezüglich des Begehens und/oder Befahrens eine hohe Belastbarkeit auf.

Bei einer bevorzugten Ausführungsform erfolgt das Verdrehen der Schubstangen mittels eines Hydraulik- oder Pneumatikzylinders, welcher beide Schubstangen einer Transportbahn gleichzeitig verdreht.

Bei einer alternativen Ausführungsform ist als Antrieb für das Verdrehen der Schubstangen ein elektrischer Kurbelantrieb vorgesehen.

Der Antrieb zum Hin- und Herbewegen der Schubstangen ist bei einer erfindungsgemäßen Transportvorrichtung so ausgebildet, daß er den Verdrehantrieb zusammen mit den Schubstangen einer Transportbahn hin- und herbewegt. Bei einer bevorzugten Ausführungsform der Erfindung erfolgt diese Hin- und Herbewegung über einen Hydraulik- oder Pneumatikzylinder.

Bei einer alternativen Ausführungsform kann als Antrieb für die Längsverschiebung der Schubstangen ein elektrischer Kurbelantrieb, beispielsweise eine exzentrisch auf einer angetriebenen Scheibe gelagerte Kurbelstange verwendet werden.

Weitere Einzelheiten und Vorteile des Gegenstandes der Erfindung ergeben sich aus der nachfolgenden Beschreibung der zugehörigen Zeichnungen, in denen eine bevorzugte Ausführungsform einer erfindungsgemäßen Transportvorrichtung dargestellt ist. In den Zeichnungen zeigen:
- Fig. 1a: einen teilweisen Querschnitt durch eine Transportbahn mit einem im Boden versenkt angeordneten Lagerblock mit darauf angeordneter Spinnkanne im abgesenkten Zustand;
- Fig. 1b: einen teilweisen Querschnitt durch eine Transportbahn mit auf dem Boden angeordneten Lagerblock und darauf aufstehender Spinnkanne im angehobenen Zustand
- Fig. 2: eine Draufsicht auf eine Transportvorrichtung mit zwei Spinnkannen und
- Fig. 3: eine ausschnittweise Vorderansicht der Transportvorrichtung gemäß Fig. 2.

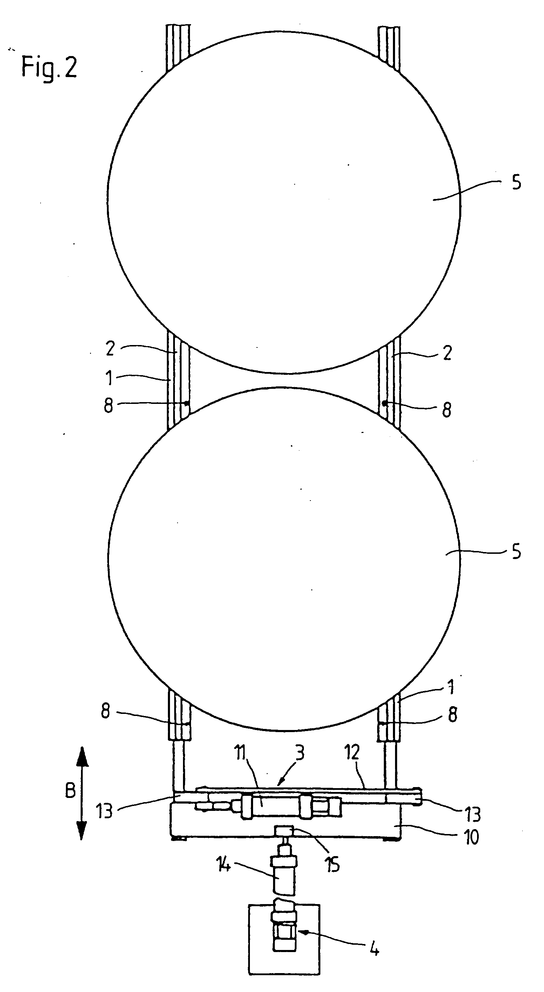

Die in Fig. 2 dargestellte Transportvorrichtung besteht im wesentlichen aus zwei parallel im Abstand zueinander verlaufenden Lagerblöcken 1 mit darin angeordneten Schubstangen 2, einem Antrieb 3 zum gleichzeitigen Verdrehen der Schubstangen 2 sowie einem Antrieb 4 zum Hin- und Herbewegen der Schubstangen 2 in den Lagerblöcken 1.

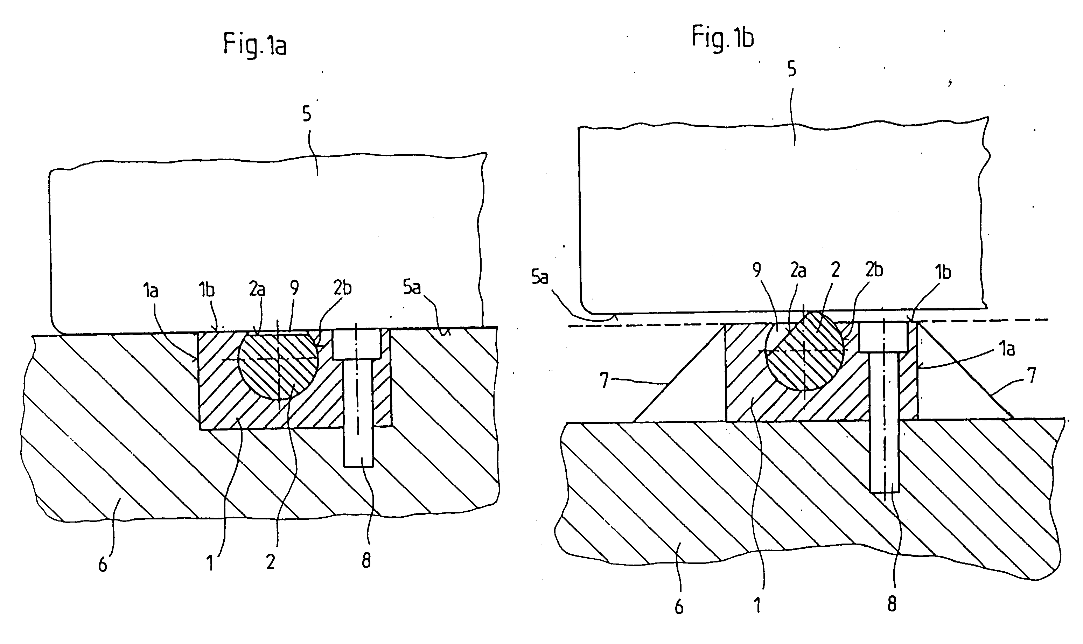

Zu transportierende Spinnkannen 5 werden so auf der Transportbahn angeordnet, daß sie jeweils auf zwei Schubstangen 2 aufstehen. Aus Fig. 1a und 1b ist der genauere Aufbau der Lagerblöcke 1 mit den darin angeordneten Schubstangen 2 ersichtlich. In dem dargestellten Ausführungsbeispiel besteht die Transportbahn aus zwei getrennten Lagerblöcken 1, welche mit Abstand und parallel zueinander angeordnet sind. Selbstverständlich kann die Transportbahn auch aus nur einem Lagerblock 1 bestehen, in welchem die Schubstangen 2 in einem vorgegebenen Abstand zueinander parallel verlaufend angeordnet sind. Bei der Ausführungsform gemäß Fig. 1a ist der Lagerblock 1 in einem Boden 6 versenkt so angeordnet, daß eine auf dem Lagerblock 1 aufstehende Spinnkanne 5 mit der Unterseite 5a gleichzeitig auf dem Boden 6 aufsteht.

Wie aus Fig. 1b ersichtlich, kann eine Transportbahn auch auf dem Boden 6 angeordnet werden. Bei dieser dargestellten, auf dem Boden 6 angeordneten Transportbahn weisen die Lagerblöcke 1 an ihren Längsseiten 1a Auflaufschrägen 7 auf, welche ein behinderungs- und gefahrfreies Begehen und Befahren der Transportbahnen erlauben. Die beispielsweise mit Schrauben 8 mit dem Boden 6 verbundenen, langgestreckten Lagerblöcke 1 weisen an ihrer Oberseite 1b eine in Längsrichtung verlaufende teilkreisförmige Nut 9 auf. Die geometrische Mittellinie dieser Nut 9 befindet sich, wie die Fig. 1a und 1b erkennen lassen, unterhalb der Oberseite 1b der Lagerblöcke 1. In der Nut 9 ist die eine Abflachung 2a aufweisende und im übrigen zylindrische Schubstange 2 so angeordnet, daß sie im Ruhezustand (Fig. 1a) vollständig innerhalb der Nut 9 zu liegen kommt und nicht über die Oberseite 1b des Lagerblockes 1 hinausragt.

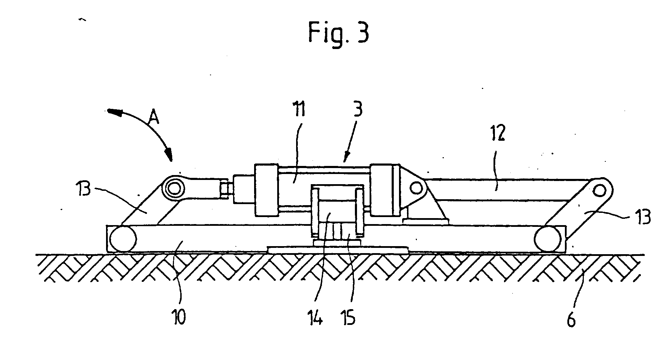

Zum Transport der Spinnkanne 5 wird die Schubstange 2 soweit innerhalb der Nut 9 verdreht, bis die Schubstange 2 mit ihrer runden Mantelfläche 2b an der Unterseite 5a der Spinnkante 5 anliegt. Beide Schubstangen 2 einer Transportvorrichtung werden dabei gleichzeitig durch den Antrieb 3 verdreht. Die Schubstangen 2 werden um mindestens 45° in Umfangsrichtung verdreht, bis die Berührungsfläche zwischen Schubstange 2 und Unterseite 5a der Spinnkanne 5 über dem Massenmittelpunkt der Schubstange 2 zu liegen kommt und somit kein permanentes Drehmoment entgegen der Verdrehrichtung des Antriebes 3 bewirkt wird. Durch das Verdrehen der Schubstangen 2 wird die auf der Transportbahn aufstehende Spinnkanne 5 angehoben (Fig. 1b). Der Aufbau der Antriebe 3 und 4 zum Verdrehen und Hin- und Herbewegen der Schubstangen 2 ist in den Fig. 2 und 3 dargestellt. Wie aus Fig. 2 ersichtlich, ist der Antrieb 3 zum Verdrehen der Schubstangen 2 auf einem Joch 10 in Querrichtung zu den Schubstangen 2 angeordnet. Den Antrieb 3 bildet ein Zylinder 11, welcher über eine Koppelstange 12 und je einem Schwenkhebel 13 für jede Schubstange 2 die Schubstangen 2 in Richtung des Pfeiles A verdrehen kann.

Zum Transport der Spinnkanne 5 in Längsrichtung der Transportbahn können die Schubstangen 2 über den Antrieb 4 hin- und herbewegt werden. Der Antrieb 4 wird wiederum von einem Zylinder 14 gebildet, welcher über eine Aufnahme 15 mit dem Joch 10 des Antriebes 3 verbunden ist und somit den Antrieb 3 mitsamt den Schubstangen 2 in Richtung des Pfeiles B hin- und herbewegen kann.

Eine erfindungsgemäße Transportvorrichtung für Spinnkannen arbeitet wie folgt:
Die zu transportierenden Spinnkannen 5 stehen so auf der Transportbahn auf, daß sie zwei in Nuten 9 angeordnete Schubstangen 2 überdecken. Zum Transport der Spinnkannen 5 werden die beiden Schubstangen 2 einer Transportbahn gleichzeitig mittels des Antriebes 3 soweit verdreht, bis die Mantelfläche 2b an der Unterseite 5a der Spinnkanne 5 zu liegen kommt. Durch das Verdrehen der Schubstangen 2 werden die Spinnkannen 5 von der Auflage auf den Lagerblöcken 1 und/oder dem Boden 6 angehoben. In diesem angehobenen Zustand erfolgt der Transport der Spinnkannen 5 in Längsrichtung der Transportbahn dadurch, daß über den Antrieb 4 die gesamte aus den Schubstangen 2 und dem Antrieb 3 bestehende Einheit in Längsrichtung der Transportbahn verschoben wird. Nach vollständig ausgeführtem Hub des Zylinders 14 des Antriebes 4 werden die Schubstangen 2 mittels des Antriebes 3 wieder in die Ausgangsstellung zurückverdreht, so daß die Spinnkannen 5 wieder auf den Lagerblöcken 1 und/oder dem Boden 6 aufliegen. Nun kann der Zylinder 14 des Antriebes 4 wieder in die Ausgangsstellung zurückfahren, ohne daß die Spinnkannen 5 bewegt werden. Der Hub des Zylinders 14 des Antriebes 4 zum Hin- und Herbewegen der Schubstangen 2 bzw. der Spinnkannen 5 kann so ausgelegt werden, daß ein Zylinderhub oder ein ganzzahliges Vielfaches die zu transportierenden Spinnkannen 5 in die vorbestimmte neue Position verschiebt. Abweichend von der dargestellten Ausführungsform kann der Antrieb 3 auch so mit den Schubstangen 2 gekoppelt sein, daß die Schubstangen 2 gegensinnig zueinander verdreht werden.

Eine nach dieser technischen Lehre ausgebildete Transportvorrichtung besteht nur aus wenigen Bauteilen, nämlich einem oder zwei Lagerblöcken 1, zwei Schubstangen 2 und einem Antrieb 3, 4 zum Verdrehen und Hin- und Herbewegen der Schubstangen 2. Der Transport der Spinnkannen 5 erfolgt auf einfache Weise durch Verdrehen und anschließendes Verschieben der Schubstangen 2 in den Lagerblöcken 1. Auf spezielle einem hohen Verschleiß unterworfene Gleitschienen für den Kannentransport kann bei dieser Ausführungsform verzichtet werden.

### Bezugszeichenliste:

1 Lagerblock
1a Längsseite
1b Oberseite
2 Schubstange
2a Abflachung
2b Mantelfläche
3 Antrieb
4 Antrieb
5 Spinnkanne
5a Unterseite
6 Boden
7 Auflaufschräge
8 Schraube
9 Nut
10 Joch
11 Zylinder
12 Koppelstange
13 Schwenkhebel
14 Zylinder
15 Aufnahme

## Patentansprüche

1. Transportvorrichtung, insbesondere zum Transport von Spinnkannen, mit wenigstens einer Transportbahn, auf der die zu transportierenden Gegenstände (5) in einer Reihe verschiebbar sind und die in Längsrichtung der Transportbahn verlaufende Schubstangen (2) aufweist, die mittels eines Antriebes (14) hin- und herbewegbar sowie in Nuten (9) verdrehbar sind,
**dadurch gekennzeichnet**,
daß die Transportbahn aus Lagerblöcken (1) mit mindestens zwei darin parallel und mit Abstand zueinander angeordneten, in Längsrichtung der Transportbahn verlaufenden teilkreisförmigen Nuten (9) besteht, und daß in den Nuten (9) zylindrische, auf ganzer Länge mit Abflachungen (2a) versehene Schubstangen (2) angeordnet sind.

2. Transportvorrichtung nach Anspruch 1, dadurch gekennzeichnet, daß die Transportbahn aus zwei Lagerblöcken (1) mit jeweils einer in Längsrichtung verlaufenden teilkreisförmigen Nut (9) und einer darin angeordneten abgeflachten Schubstange (2) besteht.

3. Transportvorrichtung nach Anspruch 1 oder 2, dadurch gekennzeichnet, daß die Schubstangen (2) zu Transport der Gegenstände (5) soweit verdrehbar sind, bis die Schubstangen (2) mit ihren runden Mantelflächen (2b) an der Unterseite (5a) der Gegenstände (5) anliegen.

4. Transportvorrichtung nach mindestens einem der Ansprüche 1 bis 3, dadurch gekennzeichnet, daß die Schubstangen (2) für den Transport um mindestens 45° verdrehbar sind.

5. Transportvorrichtung nach mindestens einem der Ansprüche 1 bis 4, dadurch gekennzeichnet, daß die beiden parallelen Schubstangen (2) einer Transportbahn gegensinnig zueinander verdrehbar sind.

6. Transportvorrichtung nach mindestens einem der Ansprüche 1 bis 4, dadurch gekennzeichnet, daß die beiden parallelen Schubstangen (2) einer Transportbahn zum Quertransport der zu transportierenden Gegenstände gleichsinnig um 360° oder ein Vielfaches davon verdrehbar sind.

7. Transportvorrichtung nach Anspruch 1, dadurch gekennzeichnet, daß der Lagerblock (1) einer auf dem Boden (6) angeordneten Transportbahn an den Längsseiten (1a) angeordnete Auflaufschrägen (7) aufweist.

8. Transportvorrichtung nach mindestens einem der Ansprüche 1 bis 7, dadurch gekennzeichnet, daß die beiden Schubstangen (2) einer Transportbahn über einen Hydraulik- oder Pneumatikzylinder (11) verdrehbar sind.

9. Transportvorrichtung nach mindestens einem der Ansprüche 1 bis 7, dadurch gekennzeichnet, daß die beiden Schubstangen (2) einer Transportbahn über einen elektrischen Kurbelantrieb verdrehbar sind.

10. Transportvorrichtung nach mindestens einem der Ansprüche 1 bis 9, dadurch gekennzeichnet, daß der Antrieb (4) zum Hin- und Herbewegen der Schubstangen (2) die Schubstangen (2) mitsamt einem Antrieb (3) zum Verdrehen der Schubstangen (2) hin- und herbewegt.

11. Transportvorrichtung nach mindestens einem der Ansprüche 1 bis 10, dadurch gekennzeichnet, daß der Antrieb (4) zum Hin- und Herbewegen der Schubstangen (2) als Hydraulik- oder Pneumatikzylinder (14) ausgelegt ist.

12. Transportvorrichtung nach mindestens einem der Ansprüche 1 bis 10, dadurch gekennzeichnet, daß der Antrieb (4) zum Hin- und Herbewegen der Schubstangen (2) als elektrischer Kurbelantrieb ausgelegt ist.

## Claims

1. Transport apparatus, especially for the transport of spinning cans, with at least one transport track, on which the articles (5) to be transported are displaceable in a row, and which has push rods (2) which extend in the longitudinal direction of the transport track and which, by means of a drive (14), are movable to and fro and are rotatable in grooves (9), characterized in that the transport track consists of bearing blocks (1) having at least two part-circular grooves (9) arranged therein parallel to and at a distance from one another and extending in the longitudinal direction of the transport track, and in that cylindrical push rods (2) provided over the entire length with flattenings (2a) are arranged in the grooves (9).

2. Transport apparatus according to Claim 1, characterized in that the transport track consists of two bearing blocks (1), each with a part-circular groove (9) extending in the longitudinal direction and with a flattened push rod (2) arranged therein.

3. Transport apparatus according to Claim 1 or 2, characterized in that, in order to transport the articles (5), the push rods (2) are rotatable until the push rods (2) bear with their round outer surfaces (2b) on the underside (5a) of the articles (5).

4. Transport apparatus according to at least one of Claims 1 to 3, characterized in that, for transport, the push rods (2) are rotatable through at least 45°.

5. Transport apparatus according to at least one of Claims 1 to 4, characterized in that the two parallel push rods (2) of a transport track are rotatable in opposite directions to one another.

6. Transport apparatus according to at least one of Claims 1 to 4, characterized in that, for the transverse transport of the articles to be transported, the two parallel push rods (2) of a transport track are rotatable in the same direction through 360° or a multiple thereof.

7. Transport apparatus according to Claim 1, characterized in that the bearing block (1) of a transport track arranged on the floor (6) has run-on slopes (7) arranged on the longitudinal sides (1a).

8. Transport apparatus according to at least one of Claims 1 to 7, characterized in that the two push rods (2) of a transport track are rotatable via a hydraulic or pneumatic cylinder (11).

9. Transport apparatus according to at least one of Claims 1 to 7, characterized in that the two push rods (2) of a transport track are rotatable via an electrical crank drive.

10. Transport apparatus according to at least one of Claims 1 to 9, characterized in that the drive (4) for moving the push rods (2) to and fro moves the push rods (2) to and fro together with a drive (3) for rotating the push rods (2).

11. Transport apparatus according to at least one of Claims 1 to 10, characterized in that the drive (4) for moving the push rods (2) to and fro is designed as a hydraulic or pneumatic cylinder (14).

12. Transport apparatus according to at least one of Claims 1 to 10, characterized in that the drive (4) for moving the push rods (2) to and fro is designed as an electrical crank drive.

## Revendications

1. Dispositif de transport, notamment destiné au transport de pots de filature, comprenant au moins une voie de transport sur laquelle les objets (5) à transporter peuvent être déplacés en translation en une rangée, et qui comporte des barres de poussée (2) s'étendant dans la direction longitudinale de la voie de transport, ces barres de poussée pouvant être déplacées selon un mouvement de va-et-vient au moyen d'un système d'entraînement (14), et pouvant tourner dans des rainures (9), caractérisé en ce que la voie de transport est constituée par des blocs de palier de support (1) dans lesquels sont agencées de manière parallèle et à distance l'une de l'autre, au moins deux rainures (9) de forme circulaire partielle et s'étendant dans la direction longitudinale de la voie de transport, et en ce que dans les rainures (9) sont agencées des barres de poussée (2) cylindriques, pourvues sur toute la longueur, de méplats (2a).

2. Dispositif de transport selon la revendication 1, caractérisé en ce que la voie de transport est constituée de deux blocs de palier de support (1) comprenant chacun une rainure (9) de forme circulaire partielle s'étendant dans la direction longitudinale, et dans laquelle est agencée une barre de poussée (2) à méplat.

3. Dispositif de transport selon la revendication 1 ou 2, caractérisé en ce que les barres de poussée (2), pour le transport des objets (5), peuvent être tournées d'une valeur telle, que les barres de poussée (2) s'appuient avec leurs surfaces périphériques rondes (2b), sur le côté inférieur (5a) des objets (5).

4. Dispositif de transport selon l'une au moins des revendications 1 à 3, caractérisé en ce que les barres de poussée (2) peuvent être tournées d'au moins 45°, pour le transport.

5. Dispositif de transport selon l'une au moins des revendications 1 à 4, caractérisé en ce que les deux barres de poussée (2) parallèles d'une voie de transport, peuvent être tournées selon des sens opposés.

6. Dispositif de transport selon l'une au moins des revendications 1 à 4, caractérisé en ce que les deux barres de poussée (2) parallèles, d'une voie de transport, pour le transport transversal des objets à transporter, peuvent être tournées dans le même sens, de 360° ou d'un multiple de cette valeur.

7. Dispositif de transport selon la revendication 1, caractérisé en ce que le bloc de palier de support (1) d'une voie de transport disposée sur le sol (6), présente des rampes inclinées disposées sur les côtés longitudinaux (1a).

8. Dispositif de transport selon l'une au moins des revendications 1 à 7, caractérisé en ce que les deux barres de poussée (2) d'une voie de transport, peuvent être tournées par un vérin hydraulique ou pneumatique (11).

9. Dispositif de transport selon l'une au moins des revendications 1 à 7, caractérisé en ce que les deux barres de poussée (2) d'une voie de transport, peuvent être tournées au moyen d'un mécanisme d'entraînement à manivelle, électrique.

10. Dispositif de transport selon l'une au moins des revendications 1 à 9, caractérisé en ce que le système d'entraînement (4) pour le mouvement de va-et-vient des barres de poussée (2), déplace en va-et-vient les barres de poussée (2) y compris un système d'entraînement (3) pour la rotation des barres de poussée (2).

11. Dispositif de transport selon l'une au moins des revendications 1 à 10, caractérisé en ce que le système d'entraînement (4) destiné à réaliser le mouvement de déplacement en va-et-vient des barres de poussée (2) est réalisé sous forme de vérin hydraulique ou pneumatique (14).

12. Dispositif de transport selon l'une au moins des revendications 1 à 10, caractérisé en ce que le système d'entraînement (4) destiné à réaliser le mouvement de déplacement en va-et-vient des barres de poussée (2) est réalisé sous forme de mécanisme d'entraînement à manivelle, électrique.
